# NEUE EUROPÄISCHE PATENTSCHRIFT

(11) **EP 2 513 212 B2**
(45) Veröffentlichungstag und Bekanntmachung des Hinweises auf die Entscheidung über den Einspruch: **15.07.2026**
(45) Hinweis auf die Patenterteilung: 21.04.2021
(21) Anmeldenummer: 10800702.2
(22) Anmeldetag: 17.12.2010
(51) Int. Cl.: C08J 11/08, B29B 17/02

(54) **VERFAHREN ZUM BEHANDELN VON KUNSTSTOFFHALTIGEN ABFÄLLEN**
METHOD FOR TREATING WASTE CONTAINING PLASTIC
PROCÉDÉ DE TRAITEMENT DE DÉCHETS CONTENANT DES MATIÈRES PLASTIQUES

(30) Priorität: 17.12.2009 DE 102009058991
(43) Veröffentlichungstag der Anmeldung: 24.10.2012
(73) Patentinhaber: Fraunhofer-Gesellschaft zur Förderung der angewandten Forschung e.V., 80686 München (DE)
(72) Erfinder: MÄURER, Andreas, 85354 Freising (DE); SCHLUMMER, Martin, 85051 Ingolstadt (DE)
(74) Vertreter: Pfenning, Meinig & Partner mbB
(86) Internationale Anmeldenummer: PCT/EP2010/007754
(87) Internationale Veröffentlichungsnummer: WO 2011/082802

(56) Entgegenhaltungen:
- EP-A1- 1 616 903
- EP-A1- 1 616 903
- EP-A1- 1 616 903
- WO-A1-2007/003691
- WO-A1-2007/009559
- WO-A1-94/12565
- DE-A1- 102005 026 451
- DE-A1- 102005 026 451

## Beschreibung

Die Erfindung betrifft ein Verfahren zum Recycling von kunststoffhaltigen Abfällen. Weiterhin betrifft die Erfindung die Verwendung des Verfahrens.

Kunststoffe werden vielfach in für die jeweilige Anwendung spezifischen Materialverbunden eingesetzt. So kommen beispielsweise bei modernen flexiblen Verpackungsmaterialen komplexe und hochfunktionelle Mehrschichtverbunde als Multilayer-Folien zum Einsatz, um eine Vielzahl von Funktionalitäten zu erreichen, wie z.B. Siegelfähigkeit, selektive Permeationseigenschaften sowie mechanische und optische Eigenschaften, maßgeschneidert für die jeweiligen Anwendungsanforderungen.

Dabei werden sowohl mit speziellen Additiven oder Füll- und Verstärkungsstoffen additivierte Compounds, Kunststoff-Kunststoffverbunde und Kunststoff-Metallverbunde oder Kunststoff-Nichtmetallverbunde, allgemein Kunststoff-/nicht-Kunststoffverbunde, eingesetzt.

Bei der Produktion und nach Gebrauch dieser kunststoffhaltigen Produkte fallen große Mengen kunststoffhaltiger Abfälle an. Diese Abfälle bergen ein großes Wertstoffpotential, das es im Sinne der Ressourceneffizienz zu nutzen gilt. Vor diesem Hinter-grund fordern auch die in den EU-Direktiven vorgegebenen Recycling-Quoten (Verpackungs-, WEEE- und ELV-Direktive) ein zumindest teilweises werkstoffliches Kunststoffrecycling, auch für die großen Mengen vermischter Verbundabfälle und Shredder-Rückstände.

Allerdings ist ein werkstoffliches Recycling für diese kunststoffhaltigen Abfälle aufgrund ihres zum Teil hohen Schadstoffgehaltes, z.B. halogenierte Aromaten und Schwermetallen, und ihrer Materialvielfalt nicht Stand der Technik. Aufgrund der Polymer-, Schad- und Störstoffvielfalt in diesen Compound- und Verbundabfällen wäre eine sehr effektive Sortierung sowie Kunststofftrennung und -aufbereitung erforderlich, um hochwertige Recyclate zu produzieren, die Neuwarespezifikationen erreichen.

Diese erforderliche Trenntechnik steht für die o.g. kunststoffhaltigen Abfälle bislang nicht zur Verfügung. Die üblichen Trennverfahren für äußerlich verschmutzte, aber sortenreine Kunststoffabfälle auf Basis unterschiedlicher Dichte, Elektrostatik, Sprödigkeit, spektroskopischer und optischer Eigenschaften, usw. versagen hier.

Zur Entsorgung der schad- und störstoffhaltigen Verbundabfälle wurden thermische und rohstoffliche Verfahren entwickelt (Pyrolyse wie Haloclean u.a. oder SUSTEC Schwarze Pumpe; Hornung, A.; Bockhorn, H.; Hornung, U. (1999):Stufenweise Vergasung von Kunststoffgemischen aus Hausmüll- und Elektronikschrottsammlungen. VDI Berichte Nr. 1492, S. 687ff; Uddin, M.A.; Bhaskar, T.; Kaneko, J.; Muto,A.; Sakata, Y.; Matsui, T. (2002) "Dehydrohalogenation during pyrolysis of brominate flame retardant containing high impact polystyrene (HIPS.Br) mixed with polyvinylchloride (PVC). Fuel 81, pp 1819-1825"; SVZ (2001): Wir schließen den Kreis. Informationsbroschüre des Sekundärrohstoff Verwertungszentrum Schwarze Pumpe (SVZ)). Nachteilig ist, dass dabei bestenfalls neue petrochemische Rohstoffe produziert oder lediglich der Heizwert der Kunststoffe genutzt werden.

Alternativ sind werkstoffliche Recyclingansätze publiziert, die trotz aufwendiger, mehrstufiger Verfahrensführung zu vermischten, undefinierten und deshalb minderwertigen Kunststoff-Recyclaten führen, sog. Down-Cycling (US 2007/0054106 A1).

Für ein hochwertiges werkstoffliches Recycling der enthaltenen Kunststoffe wurden bereits verschiedene lösemittelbasierte Recyclingverfahren (Selektive Extraktion: Mäurer, A., Schlummer, M. (2004) "Good as new. Recycling plastics from WEEE and packaging waste." Waste Management World, May-June 2004, pp 33-43; und EP 0 949 293 A2 oder JP 2000146540 oder DE 19927523 A1 oder Basis-Patent v. Bruce E. Naumann: DE 69033888 T2) entwickelt, die aufgrund ihrer großen Reinigungsleistung eine hohe Wertschöpfung erreichen.

Nachteilig bei diesen Umlöseverfahren sind die hohen Lösemittelströme, die bei den üblichen niedrigen Konzentrationen der Kunststofflösungen (Naumann nennt explizit 5-20% Polymerbeladung), das etwa 10-fache des Recyclat-Massenstroms betragen.

Diese großen Lösemittelmengen müssen energieintensiv prozessintern zurück gewonnen werden. Die Rückgewinnung erfolgt durch thermische Trocknung der gereinigten Polymerlösung, Verdampfung und Destillation, d.h. Verfahren, die hinsichtlich Betriebs- und Investitionskosten sehr teuer sind.

Ebenso nachteilig wie die geringen Polymerbeladungen (unwirtschaftlicher Betrieb) sind die anfallenden großen Anteile nicht-gelöster mit viel Lösemittel behafteter Filterrückstände, die aufwendig mehrstufig nachgewaschen werden müssen und in denen die Fremdpolymere bzw. Reststoffe durch diese lange Einwirkdauer auch noch häufig stark gequollen sind und die für eine Weiterbehandlung energieintensiv getrocknet werden müssen.

Diese Nachteile des Standes der Technik führen letztendlich dazu, dass lösemittelbasierte Recyclingverfahren erst für große Durchsätze (> 1.000 kg/h) und möglichst im kontinuierlichen 3- oder 4-Schichtbetrieb wirtschaftlich sind, da sich die hohen Investitionskosten nur bei großen Durchsätzen amortisieren (factor of scale) und ein häufiges An- und Abfahren der Anlage insbesondere im Bereich der Destillation und Lösemittelrückgewinnung (Prozessschritte, die typischerweise kontinuierlich betrieben werden) sehr zeit- und energieaufwendig und damit teuer ist.

Ausgehend hiervon ist es Aufgabe der vorliegenden Erfindung, ein kostengünstiges und vereinfachtes Recycling von kunststoffhaltigen Abfällen zu ermöglichen.

Die DE 10 2005 026 451 A1 betrifft ein Verfahren zum Recycling von Kunststoffen, wobei ein Zielpolymer als gelartiges Fällungsprodukt hergestellt wird, aus dem lösliche und nicht-lösliche Bestandteile abgetrennt werden.

Aus EP 1 616 903 A1 ist eine Vorrichtung zur Filtration eines sich im Gelzustand befindlichen Polystyrol-Harzes, das Fremdkörper enthält, zu entnehmen. Hierbei werden Abfälle der Polystyrol-Harze mit einem Lösungsmittel in Kontakt gebracht, um ein Gel zu erzeugen. Fremdkörper werden dann durch Filtration abgetrennt.

Die WO 94/12565 A1 betrifft ein Verfahren zum Trennen von an sich löslichem Kunststoff aus dem Verbund mit anderen Werkstoffen, in denen er mit einem Quellmittel mit einem Quellmittel und Kontakt kommt und aufgequollen wird und der Kunststoff anschließend durch ein mechanisches Verfahren im gequollenen Zustand von dem Rest des Materialverbunds entfernt wird.

Diese Aufgabe wird durch das Verfahren zum Recycling von kunststoffhaltigen Abfällen gemäß Anspruch 1 gelöst. Anspruch 10 betrifft die Verwendung des Verfahrens. Die weiteren abhängigen Ansprüche betreffen bevorzugte Ausführungsformen.

Erfindungsgemäß ist ein Verfahren zum Recycling von kunststoffhaltigen Abfällen enthaltend mindestens ein Zielpolymer und mindestens einen abzutrennenden Stoff (Wert- oder Störstoff), bei dem
a) der kunststoffhaltige Abfall mit mindestens einem Quellmittel unter Quellung des mindestens einen Zielpolymers zu einem Polymergel als erste Phase mit einem Polymergehalt von >30 Gew.-%, bezogen auf die Gesamtmasse des im Polymergel enthaltenen Zielpolymers und Quellmittels, versetzt wird und
b) mindestens ein in der ersten Phase nicht löslicher Stoff mittels Filtration von dem Polymergel abgetrennt wird,
   wobei als Filtrationsvorrichtung ein Sieb mit einer Maschenweite von 1 bis 1000 µm eingesetzt und das gequollene Polymergel durch das Sieb gefördert wird, wobei
   das Zielpolymer ausgewählt ist aus der Gruppe bestehend aus Polystyrolen, Polyolefinen, Polyestern, Polycarbonaten, Polyamiden und deren Copolymeren sowie deren Blends oder Gemischen; und
   der nicht-lösliche Störstoff ausgewählt ist aus der Gruppe bestehend aus Füll- und Verstärkungsstoffen, inerte Verschmutzungen, Fremdpolymere, duromeren Klebeschichten oder Schäumen und Schwermetallpigmenten, wobei das Polymergel eine dynamische Viskosität im Bereich von 100 mPas bis 10.000 Pas, gemessen nach ISO 6721-10:1999, aufweist,
   wobei die kunststoffhaltigen Abfälle in einem Extruder aufgeschmolzen werden.

Bei dem erfindungsgemäßen Verfahren kann mit geringeren Lösemittelmengen, bezogen auf Polymerdurchsatz, und in einfachen, auch bei geringen Durchsätzen wirtschaftlichen, Aggregaten gearbeitet werden. Es gilt, die Vorteile der Umlöseverfahren zu erhalten, also ein großes Reinigungspotential durch Reinigen der gelösten Polymere auf molekularer Ebene, aber die Nachteile (komplexes mehrstufiges Verfahren mit hohen Energie- und Investitionskosten) zu reduzieren.

Durch ein selektives Quellen des Zielpolymers wird einerseits die Viskosität erniedrigt. Dies ist wichtig für eine verbesserte Filtration, d.h. Abtrennung der nicht-löslichen Stoffe. Andererseits werden die Diffusionsraten erhöht, was wichtig für eine verbesserte Extraktion löslicher Stoffe ist.

Bevorzugt bildet sich in oder nach Schritt a) des erfindungsgemäßen Verfahrens eine flüssige oder mit dem Polymergel nicht mischbare Phase des Quellmittels als zweite Phase aus, in der mindestens eine Stoff gelöst wird.

Gegenüber den bekannten Umlöseverfahren grenzt sich das selektive Quellen ab durch zumindest eines der Merkmale:
1. Die erzeugten gequollenen Polymergele weisen einen höheren Polymergehalt, typischerweise >30%, insbesondere >50% auf.
2. Die Viskosität der gequollenen Zielpolymere ist deutlich größer als die bekannten Polymerlösungen.
3. Während die bekannten Polymerlösungen homogen einphasig sind und sich bei weiterer Zugabe von Lösemittel homogen verdünnen lassen, verhalten sich die Zielpolymere mit den selektiven Quellmitteln anders: Das Zielpolymer wird nur bis zu einem bestimmten Grad aufgequollen, d.h. das entstehende Polymergel nimmt weiteres Quellmittel nicht mehr auf. Es bildet sich ein heterogenes Zweiphasengemisch aus Gel und überschüssigem Quellmittel.

Hier bietet sich nun die Möglichkeit der Stoffabtrennung: Die hochviskosen Gele können druckfiltriert werden und das überschüssige Quellmittel enthält lösliche Stoffe und kann vom Gel einfach abgetrennt werden, wobei eine mehrstufige oder Gegenstrom-Extraktion möglich sind.

Aufgrund der kleinen umlaufenden, zu verdampfenden und thermisch-destillativ aufzubereitenden Lösemittel- bzw. Quellmittelmengen lassen sich die Betriebskosten reduzieren. Nur ein Bruchteil (10-50%) des thermischen Energiebedarfs für den geschlossenen Lösemittelkreislauf ist notwendig.

Die "nicht-löslichen Wert-, Stör- und Schadstoffe" (äußere und innere), wie Füll- und Verstärkungsstoffe, inerte Vermutzungen, Fremdpolymere, duromere Klebeschichten oder Schäume, Schwermetallpigmente usw. lassen sich aufgrund der niedrigen Viskosität bei niedrigerer Temperatur (im Vergleich zur Schmelzefiltration) leichter abfiltrieren (höhere Flüsse bzw. Durchsätze). Die niedrigere Temperatur bedeutet weniger Qualitätsverlust, z.B. durch thermooxidative Schädigung. Darüber hinaus sind weniger Verarbeitungsstabilisatoren erforderlich. Weiterhin werden feinere Siebe eingesetzt. Der Druckabfall über die Siebe ist geringer, daher werden elastomere Verunreinigungen besser abfiltriert, also weniger mit durchs Sieb "gequetscht". Das gequollene Polymergel kann mit geringerem Druck wesentlich sanfter als eine Polymerschmelze durch ein Sieb gefördert werden. Aufgrund der geringeren Scherbelastung bleiben die Ketten intakt.

Es findet eine wesentlich geringere thermisch-mechanische Belastung auch der abzutrennenden organischen Verunreinigungen und Fremd-Polymere statt: es entsteht eine reduzierte Querkontamination (z.B. durch PVC) und damit auch wesentlich weniger Materialschädigung und Molekulargewichtsabbau. Die originären Polymereigenschaften und die Polymerqualität des Zielpolymers bleiben erhalten. Auch die abgetrennten Fremdpolymere sind aufgrund der schonenden Behandlung von unverändert hoher Qualität, ein nachgeschaltetes Recycling bleibt möglich.

Die "löslichen Wert-, Stör- und Schadstoffe" wie unerwünschte Altadditive und deren Reaktionsprodukte sowie niedermolekulare polymere Abbauprodukte, Oligomere und Restmonomere können aus dem gequollenen Zielpolymer aufgrund der wesentlich höheren Diffusionsraten effektiv extrahiert werden. Dies minimiert die sonst häufig erforderliche lange Temperatur-Zeitbelastung zur Vakuumentgasung, z.B. für PS (Polystyrol) oder für eine PET (Polyethylenterephthalat)- oder PA (Polyamid)-Festphasennachkondensation und reduziert die thermisch induzierten unerwünschten Nebenreaktionen, wie Zersetzung und Monomerabspaltung oder z.B. die Acetaldehydbildung bei PET.

Auch eine Verwendung von 5-10% Quellmittel als Filtrationshilfsmittel ist sinnvoll. Dann werden niedermolekulare Kontaminanten bei inline oder nachgeschalteter Vakuumentgasung reduziert. Positiv ist dabei der Strippeffekt und eine reduzierte innere Reibung.

Vorteile sind Verfahrensvereinfachung gegenüber den Umlöseverfahren mit Fällung, die auch bei sehr hoher Reinigungsleistung einen 40-50%igen Polymergehalt erreichen: Statt 4 oder 5 Prozessschritte in 4-5 verschiedenen Aggregaten (Lösen, Filtrieren, ggf. Extrahieren, Fällen und Trocknen) wird der Fällschritt eingespart und alle Schritte der Störstoffextraktion durch selektives Quellen (Quellen, Filtrieren, ggf. Extrahieren und Trocknen) können in einem Aggregat (Entgasungsextruder mit Quellmitteldosierung vor der Schmelzefiltration) durchgeführt werden. Außerdem sind die Apparate aufgrund der kleineren umlaufenden Massen, da weniger Lösemittel eingesetzt wird, bei gleichem Polymerdurchsatz kleiner.

Dies reduziert die Investitionskosten erheblich, so dass auch bei kleineren Durchsätzen ein wirtschaftlicher Betrieb erreicht sowie ein auf die Kundenbedürfnisse zugeschnittenes Recycling ermöglicht wird. Weiterhin ist eine sehr gute Skalierbarkeit von Extrudern machbar, wodurch ein sicherer Upscale und niedriges Risiko bei Markteintritt erzielt wird.

Bevorzugt wird das Polymergel durch Abziehen des Quellmittels getrocknet und in ein Polymergranulat überführt, wobei das vom Polymergel abgezogene Quellmittel in das Verfahren, gegebenenfalls in aufgereinigter Form, zurückgeführt wird.

Das Polymergel weist dabei eine dynamische Viskosität im Bereich von 100 mPas bis 10.000 Pas (gemessen nach ISO 6721-10:1999) auf.

Erfindungsgemäß werden die kunststoffhaltigen Abfälle mit dem Quellmittel versetzt und in einem Extruder aufgeschmolzen. Dies erleichtert insbesondere das Quellen des Zielpolymers.

Weiterhin ist besonders bevorzugt, dass das Polymergel einen Polymergehalt von ≥ 50 Gew.-%, insbesondere 70 bis 90 Gew.-% bezogen auf die Gesamtmasse des im Polymergel enthaltenen Polymers und Quellmittels, aufweist.

Dadurch ist es möglich, dass für die Filtration ein Druck im Bereich von 0,5 bar bis 300 bar eingehalten wird. Somit ist es möglich, dass das Polymergel während der Filtration einer geringeren Scherbelastung unterworfen ist. Aufgrund der geringen Scherbelastung bleiben daher die Polymerketten, insbesondere des Zielpolymers, intakt.

Bevorzugt wird während der Filtration eine Temperatur im Bereich von 20 °C bis 300 °C eingehalten. Folglich werden sowohl das Zielpolymer als auch der Stoff einer möglichst geringen thermischen Belastung ausgesetzt, was ein effektives Reycling verbessert.

Die Diffusionskoeffizient der gelösten Stoffe kann im erfindungsgemäßen Verfahren im Bereich von 3,0*10⁻¹² cm²/s bis 1,0*10⁻⁹ cm²/s liegen.

Für die Gelfiltration können dabei folgende Daten gelten:
Diffusionskoeffizient für DEHP in PS bei 1 ppm DEHP und 80 °C: 3,281*10⁻¹² cm²/s, aus Migratest^{®} Lite, FABES
Diffusionskoeffizient für DEHP in PS bei 20 % DEHP und 80 °C: 1,2*10⁻¹⁰ cm²/s
Diffusionskoeffizient für DEHP in PS bei 30 % DEHP und 80 °C: 5,5*10⁻¹⁰ cm²/s
Diffusionskoeffizient für DEHP in PS bei 40 % DEHP und 80 °C: 1,4*10⁻⁹ cm²/s
(Hellwege, Knappe und Loge, Kolloid-Zeitschrift, Bd. 179(1), S. 40 ff)

Als Stoffe können halogenierte Substanzen, insbesondere fluorierte, chlorierte, bromierte oder gemischthalogenierte aromatische Kohlenwasserstoffe, oder aliphatische Kohlenwasserstoffe, besonders bevorzugt poly-chlorierte oder poly-bromierte aromatische Kohlenwasserstoffe oder Flammschutzmittel abgetrennt werden.

Weiterhin können als Stoffe Wert- und/oder Störstoffe Nicht-Metalle, Composites, Glas, Füllstoffe, Fremdkunststoffe, inerte organische oder anorganische Komponenten abgetrennt werden.

Als Quellmittel werden bevorzugt halogenfreie Flüssigkeiten, insbesondere Wasser, Alkohole, Aldehyde, Ketone, Säuren, Laugen, aliphatische Kohlenwasserstoffe, aromatische Kohlenwasserstoffe, Ester, Ether, Heterozyklen oder Mischungen hiervon eingesetzt. In Abhängigkeit von dem Zielpolymer sowie den abzutrennenden Stoffen kann das geeignete Quellmittel gewählt werden.

Weiterhin können im erfindungsgemäßen Verfahren die im Quellmittel nicht löslichen Stoffe bevorzugt als ein Filterkuchen in der Filtrationsvorrichtung gesammelt werden.

Hierzu kann eine Vorrichtung zur Abtrennung von Stoffen aus Zielpolymer enthaltenden kunststoffhaltigen Abfällen eingesetzt werden, die eine Zuführung für die kunststoffhaltigen Abfälle, einen Extruder, eine Vorrichtung zur Quellmittelzudosierung, eine Filtrationsvorrichtung sowie eine Vorrichtung zum Abziehen des Quellmittels aufweist.

Diese Vorrichtung kann darüberhinaus einen vorgeschalteten Mischer aufweisen. Weiterhin kann sie eine Granulierungseinheit aufweisen, durch die das aufgereinigte Polymer in eine einfach weiter zu verarbeitende Form überführt wird.

Weiterhin kann die Vorrichtung eine rotierende Filtrationsvorrichtung, insbesondere ein rotierendes Sieb, beispielsweise für einen kontinuierlichen Austrag des Filterkuchens, aufweisen.

Weiterhin ist die Verwendung des Verfahrens zum Recycling von Verbundabfällen, Verpackungsabfällen, Galvanikabfällen, additivierten Zusammensetzungen, Mehrschichtverbunden, Kunststoff/Kunststoff-Verbunden, Kunststoff/Nicht-Kunststoff-Verbunden, insbesondere Kunststoff/Metall-Verbunden, Kunststoff/NichtMetall-Verbunden erfindungsgemäß.

Anhand der folgenden Figuren 1 bis 3 soll der anmeldungsgemäße Gegenstand näher erläutert werden, ohne ihn auf diese Varianten einzuschränken.
- Figur 1: zeigt eine Prinzipskizze zur Schmelzefiltration gequollener Galvanikabfälle.
- Figur 2: zeigt ein Diagramm, in dem die Erhöhung der Schmelzeviskosität durch Lösungsmittelanteile im Mahlgut dargestellt ist.
- Figur 3: zeigt die Abhängigkeit des Druckes vom prozentualen Quellmittelgehalt in ABS.

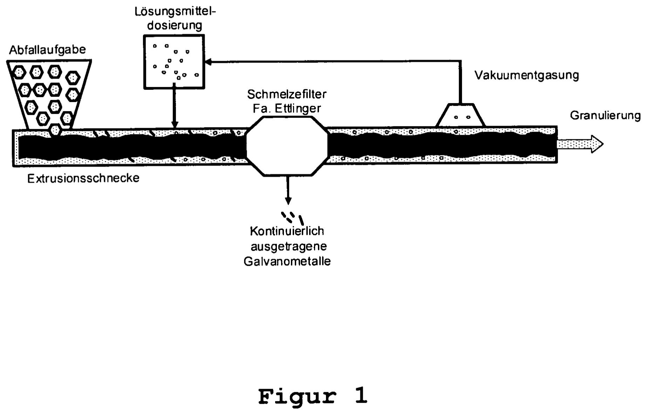

In Figur 1 ist schematisch der Kreislauf des Verfahrens dargestellt. Der zum Mahlgut verarbeitete Galvanikabfall wird in einem Extruder aufgeschmolzen und noch vor dem Schmelzefilter eine definierte Lösungsmittelmenge zudotiert. Alternativ erfolgt die Dosierung in einem vorgeschalteten Mischer. Die resultierende niedrigviskose Schmelze wird dann mit einem hochkapazitiven kontinuierlichen Schmelzefilter, z.B. der Fa. Ettlinger, filtriert. Anschließend wird das Lösungsmittel an einem Vakuumentgasungsdom aus der Schmelze entfernt und das Polymer am Ende der Extrusionsschnecke granuliert. Der Filterkuchen mit hohen Gehalten an Chrom, Nickel und Kupfer wird durch ein rotierendes Filtersystem kontinuierlich ausgetragen und steht für die im Stand der Technik genannten Ätzverfahren bereit, um auch die Metalle wieder im Kreislauf zu führen.

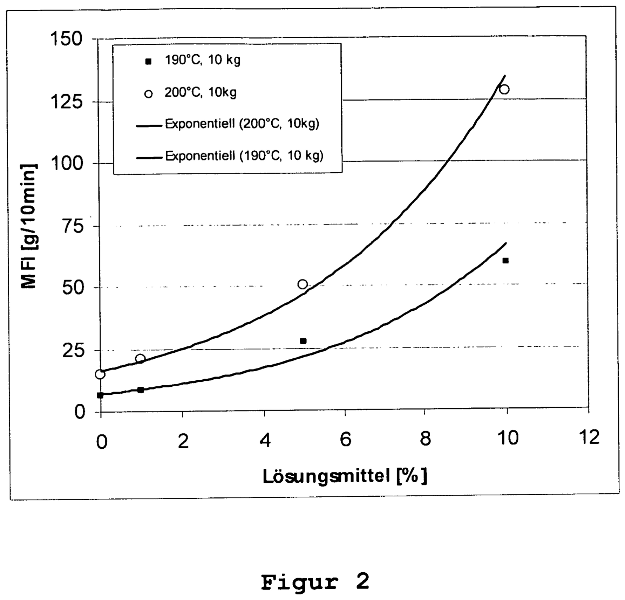

Figur 2 zeigt die Erhöhung der Schmelzeviskosität von Abfallkunststoffen in Abhängigkeit der Lösungsmittelanteile im Mahlgut. ABS (Acrylnitril-Butadien-StyrolCopolymerisat)-Mahlgut wurde mit verschiedenen Mengen eines kennzeichnungsfreien Lösungsmittels versetzt und als Maß für die Viskosität der Melt Flow Index (MFI, Schmelz-Index) bestimmt. Aufgrund der zu erwartenden Viskositätserniedrigung wurden die Messungen anstatt bei normalen MFI-Bedingungen für ABS (220°C, 10kg) bei geringeren Temperaturen von 190 und 200°C durchgeführt. Figur 2 zeigt den deutlichen Effekt der Lösungsmitteldosierung: Eine 5%ige Lösungsmitteldosierung führt zu einem Anstieg des MFI um Faktor 3-4, eine 10%ige Dosis zum Anstieg um Faktor 8,5.

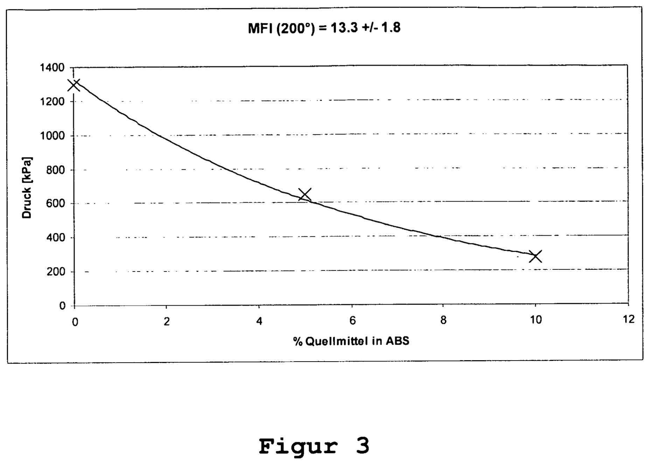

Um den durch Quellmittelzugabe verursachten reduzierten Druckabfall über einem Filter abzuschätzen, wurde eine ABS-Qualität mit 0, 5 und 10% Quellmittel versetzt und der MFI bei 200°C aber verschiedenen Auflastgewichten (bzw. Drücken) gemessen. Dies ist in Figur 3 dargestellt. Bei zunehmendem Quellmittelgehalt wurde ein mittlerer MFI von 13.3+/-1.8 g/10min durch geringere Auflasten bzw. Drücke konstant gehalten. D.h. im Beispiel entspricht eine 10%ige Quellmittelzugabe einer Druckreduktion um den Faktor 5.

## Patentansprüche

1. Verfahren zum Recycling von kunststoffhaltigen Abfällen enthaltend mindestens ein Zielpolymer und mindestens einen abzutrennenden Stoff, bei dem
a) der kunststoffhaltige Abfall mit mindestens einem Quellmittel unter Quellung des mindestens einen Zielpolymers zu einem Polymergel als erste Phase mit einem Polymergehalt von >30 Gew.-%, bezogen auf die Gesamtmasse des im Polymergel enthaltenen Zielpolymers und Quellmittels, versetzt wird
b) mindestens ein in der ersten Phase nicht löslicher Störstoff mittels Filtration von dem Polymergel abgetrennt wird, wobei als Filtrationsvorrichtung ein Sieb mit einer Maschenweite von 1 bis 1000 µm eingesetzt und das gequollene Polymergel durch das Sieb gefördert wird,
wobei
das Zielpolymer ausgewählt ist aus der Gruppe bestehend aus Polystyrolen, Polyolefinen, Polyestern, Polycarbonaten, Polyamiden und deren Copolymeren sowie deren Blends oder Gemischen; und
der nicht-lösliche Störstoff ausgewählt ist aus der Gruppe bestehend aus Füll- und Verstärkungsstoffen, inerte Verschmutzungen, Fremdpolymere, duromeren Klebeschichten oder Schäumen und Schwermetallpigmenten,
wobei das Polymergel eine dynamische Viskosität im Bereich von 100 mPas bis 10.000 Pas, gemessen nach ISO 6721-10:1999, aufweist,
wobei die kunststoffhaltigen Abfälle in einem Extruder aufgeschmolzen werden.

2. Verfahren nach dem vorhergehenden Anspruch,
**dadurch gekennzeichnet, dass** sich in oder nach Schritt a) eine flüssige und mit dem Polymergel nicht mischbare Phase des Quellmittels als zweite Phase ausbildet, in der der mindestens eine Stoff gelöst wird.

3. Verfahren gemäß einem der vorhergehenden Ansprüche,
**dadurch gekennzeichnet, dass** das Polymergel durch Abziehen des Quellmittels getrocknet und in ein Polymergranulat überführt wird, wobei das vom Polymergel abgezogene Quellmittel in das Verfahren in aufgereinigter Form zurückgeführt wird.

4. Verfahren gemäß einem der vorhergehenden Ansprüche,
**dadurch gekennzeichnet, dass** das Polymergel einen Schmelzflussindex (MFR), gemessen nach ISO 1133 im Bereich von 1 bis 100 g/10 min aufweist.

5. Verfahren gemäß einem der vorhergehenden Ansprüche,
**dadurch gekennzeichnet, dass** das Polymergel einen Polymergehalt von ≥ 50 Gew.-%, insbesondere 70 bis 90 Gew.-% bezogen auf die Gesamtmasse des im Polymergel enthaltenen Polymers und Quellmittels, aufweist.

6. Verfahren gemäß einem der vorhergehenden Ansprüche,
**dadurch gekennzeichnet, dass** während der Filtration eine Temperatur im Bereich von 20°C bis 300°C eingehalten wird.

7. Verfahren gemäß einem der vorhergehenden Ansprüche,
**dadurch gekennzeichnet, dass** als Stoffe halogenierte Substanzen, insbesondere fluorierte, chlorierte, bromierte oder gemischthalogenierte aromatische Kohlenwasserstoffe, oder aliphatische Kohlenwasserstoffe, besonders bevorzugt poly-chlorierte oder poly-bromierte aromatische Kohlenwasserstoffe oder Flammschutzmittel abgetrennt werden.

8. Verfahren gemäß einem der vorhergehenden Ansprüche,
**dadurch gekennzeichnet, dass** als Quellmittel halogenfreie Flüssigkeiten, insbesondere Wasser, Alkohole, Aldehyde, Ketone, Säuren, Laugen, aliphatische Kohlenwasserstoffe, aromatische Kohlenwasserstoffe, Ester, Ether, Heterozyklen oder Mischungen hiervon eingesetzt werden.

9. Verfahren gemäß einem der vorhergehenden Ansprüche,
**dadurch gekennzeichnet, dass** die im Quellmittel nicht-löslichen Stoffe als ein Filterkuchen in der Filtrationsvorrichtung gesammelt werden.

10. Verwendung des Verfahrens gemäß einem der Ansprüche 1 bis 9 zum Recycling von Verbundabfällen, Verpackungsabfällen, Galvanikabfällen, additivierten Zusammensetzungen, Mehrschichtverbunden, Kunststoff/Kunststoff-Verbunden, Kunststoff/Nicht-Kunststoff-Verbunden, insbesondere Kunststoff/Metall-Verbunden, Kunststoff/Nicht-Metall-Verbunden.

## Claims

1. A method for recycling waste containing plastics, comprising at least one target polymer and at least one substance to be separated, in which
a) the waste containing plastics is mixed with at least one swelling agent, so as to swell the at least one target polymer to form a polymer gel as a first phase having a polymer content of > 30 wt.%, based on the total mass of the target polymer and of the swelling agent present in the polymer gel, and
b) at least one impurity that is not soluble in the first phase is separated from the polymer gel by way of filtration, a screen having a mesh size of 1 to 1000 µm being used as a filtration device, and the swollen polymer gel being moved through the screen,
wherein
the target polymer is selected from the group consisting of polystyrenes, polyolefins, polyesters, polycarbonates, polyamides and the copolymers thereof, as well as the blends or mixtures thereof, and
the insoluble impurity is selected from the group consisting of fillers and reinforcement agents, inert impurities, foreign polymers, du-romeric adhesive layers or foams, and heavy metal pigments,
wherein the polymer gel has a dynamic viscosity in the range of 100 mPas to 10,000 Pas, measured according to ISO 6721-10:1999, wherein the waste containing plastics is melted in an extruder.

2. The method according to the preceding claim,
**characterized in that**, during or after step a), a liquid phase of the swelling agent that is not miscible with the polymer gel forms as a second phase, in which at least one substance is dissolved.

3. A method according to any one of the preceding claims, **characterized in that** the polymer gel is dried by removing the swelling agent and converted into polymer granules, the swelling agent removed from the polymer gel being recirculated to the method in purified form.

4. A method according to any one of the preceding claims,
**characterized in that** the polymer gel has a melt flow rate (MFR), measured according to ISO 1133, in the range of 1 to 100 g/10 min.

5. A method according to any one of the preceding claims, **characterized in that** the polymer gel has a polymer content of > 50 wt.%, in particular 70 to 90 wt.%, based on the total mass of the polymer and of the swelling agent present in the polymer gel.

6. A method according to any one of the preceding claims,
**characterized in that** a temperature in the range of 20°C to 300°C is maintained during the filtration.

7. A method according to any one of the preceding claims,
**characterized in that** halogenated substances, in particular fluorinated, chlorinated, brominated or mixed-halogenated aromatic hydrocarbons, or aliphatic hydrocarbons, particularly preferably poly-chlorinated or poly-brominated aromatic hydrocarbons or flame retardants, are separated as substances.

8. A method according to any one of the preceding claims,
**characterized in that** halogen-free liquids, in particular water, alcohols, aldehydes, ketones, acids, lyes, aliphatic hydrocarbons, aromatic hydrocarbons, esters, ethers, heterocyclic compounds or mixtures thereof are used as the swelling agent.

9. A method according to any one of the preceding claims,
**characterized in that** the substances that are insoluble in the swelling agent are collected in the form of a filter cake in the filtration device.

10. Use of the method according to any one of claims 1 to 9 for recycling composite waste, packaging waste, galvanic waste, additized compositions, multilayer composites, plastic/plastic composites, plastic/non-plastic composites, in particular plastic/metal composites, plastic/non-metal composites.

## Revendications

1. Procédé pour recycler des déchets contenant des matières plastiques comprenant au moins un polymère cible et au moins une matière à séparer, dans lequel
a) le déchet contenant des matières plastiques est mélangé avec au moins un agent de gonflement, entraînant le gonflement du au moins un polymère cible en un gel polymère en tant que première phase ayant une teneur en polymère >30 % en poids rapporté à la masse totale du polymère cible et de l'agent de gonflement contenu dans le gel polymère
b) au moins une impureté non soluble dans la première phase est séparée du gel polymère au moyen d'une filtration, dans lequel un crible avec une ouverture de maille de 1 à 1000 µm est utilisé comme dispositif de filtration et le gel polymère gonflé est transporté à travers le crible,
dans lequel
le polymère cible est sélectionné dans le groupe constitué des polystyrènes, polyoléfines, polyesters, polycarbonates, polyamides et leurs copolymères ainsi que les mélanges homogènes ou les associations de ceux-ci ; et
l'impureté non soluble est sélectionnée dans le groupe constitué des charges, des matières de renforcement, des contaminants inertes, des polymères étrangers, des couches adhésives ou des mousses thermodurcissables et des pigments de métaux lourds,
dans lequel le gel polymère présente une viscosité dynamique comprise entre 100 mPas et 10 000 Pas, mesurée selon ISO 6721-10:1999, dans lequel les déchets contenant des matières plastiques sont fondus dans une extrudeuse.

2. Procédé selon la revendication précédente,
**caractérisé en ce que** pendant ou après l'étape a), une phase de l'agent de gonflement liquide et non miscible avec le gel polymère se forme en tant que deuxième phase, dans laquelle au moins une matière est dissoute.

3. Procédé selon l'une quelconque des revendications précédentes, **caractérisé en ce que** le gel polymère est séché par extraction de l'agent de gonflement et transformé en un granulat polymère, dans lequel l'agent de gonflement extrait du gel polymère est réintroduit dans le procédé sous forme purifiée.

4. Procédé selon l'une quelconque des revendications précédentes,
**caractérisé en ce que** le gel polymère présente un indice de fluidité à chaud (MFR), mesuré selon ISO 1133 dans la plage de 1 à 100 g/10 min.

5. Procédé selon l'une quelconque des revendications précédentes, **caractérisé en ce que** le gel polymère présente une teneur en polymère ≥ 50 % en poids, en particulier de 70 à 90 % en poids rapporté à la masse totale du polymère et de l'agent de gonflement compris dans le gel polymère.

6. Procédé selon l'une quelconque des revendications précédentes,
**caractérisé en ce qu'**une température dans la plage de 20 °C à 300 °C est maintenue pendant la filtration.

7. Procédé selon l'une quelconque des revendications précédentes,
**caractérisé en ce que** des substances halogénées, en particulier des hydrocarbures aromatiques fluorés, chlorés, bromés ou halogénés mixtes, ou des hydrocarbures aliphatiques, de préférence des hydrocarbures aromatiques poly-chlorés ou poly-bromés ou des ignifuges sont séparées en tant que matières.

8. Procédé selon l'une quelconque des revendications précédentes,
**caractérisé en ce que** des liquides sans halogènes, en particulier de l'eau, des alcools, des aldéhydes, des cétones, des acides, des solutions alcalines, des hydrocarbures aliphatiques, des hydrocarbures aromatiques, des esters, des éthers, des hétérocycles ou des mélanges de ceux-ci sont utilisés comme agent de gonflement.

9. Procédé selon l'une quelconque des revendications précédentes,
**caractérisé en ce que** les matières non solubles dans l'agent de gonflement sont collectées dans le dispositif de filtration en tant que gâteau de filtration.

10. Utilisation du procédé selon l'une quelconque des revendications 1 à 9 pour le recyclage de déchets composites, déchets d'emballages, déchets de la galvanisation, compositions à additifs, composites multi-couches, composites plastique/plastique, composites plastique/non-plastique, en particulier composites plastique/métal, composites plastique/non-métal.
